# EUROPEAN PATENT SPECIFICATION

(11) **EP 2 893 309 B1**
(45) Date of publication and mention of the grant of the patent: **12.12.2018**
(21) Application number: 13785944.3
(22) Date of filing: 10.09.2013
(51) Int. Cl.: G01G 21/28

(54) **AUTOMATIC DOOR OPENING MECHANISM OF AN ANALYTICAL BALANCE'S WEIGHING CHAMBER**
AUTOMATISCHER TÜRÖFFNUNGSMECHANISMUS DER WIEGEKAMMER EINER ANALYSENWAAGE
MÉCANISME D'OUVERTURE DE PORTE AUTOMATIQUE DE CHAMBRE DE PESAGE DE BALANCE ANALYTIQUE

(30) Priority: 10.09.2012 PL 40071712
(43) Date of publication of application: 15.07.2015
(73) Proprietor: Radwag Wagi Elektroniczne Witold Lewandowski, 26-600 Radom (PL)
(72) Inventor: SZOT, Pawel, 26-600 Radom (PL); LEWANDOWSKI, Witold, 26-600 Radom (PL)
(74) Representative: Lampart, Jerzy
(86) International application number: PCT/PL2013/000128
(87) International publication number: WO 2014/038969

(56) References cited:
- US-A- 4 700 793
- US-A1- 2005 092 529

## Description

Subject of the invention is a mechanism for automatic opening of the slidable components realized as the side walls of a weighing chamber, in particular of an analytical balance.

An analytical balance described in a patent EP234008, comprising a weighing chamber, featuring slidable side doors and top cover. The side doors and the top cover can be moved either individually or coupled and slid together manually or automatically using a drive. The side doors are joined together using a panel located under the weighing pan of the weighing chamber. The connection between the slidable components is carried out using sliding mandrels located in the grips, that can couple the sliding doors with the top panel and the sliding doors with each other via the plate located outside the weighing chamber.

A balance described in a patent JP003262549 with a weighing chamber comprising glass parts and which feature slidable side panels positioned in guides with fastened special guides entering into bodies of air cylinders controlled from the controller (terminal) level. The proximity sensor is designed using a transmitter and receiver of light. Approximation to the housing causes cutting a light beam and opening the housing.

A balance described in a patent US6504112 featuring an anti-draft shield with slidable side and top panels. The moveable panels can be opened either manually or automatically. The movement of the components is feasible in a manual execution or automatic one using a motor. The characteristic features is the design of the slidable components of the side panels based on horizontal cylindrical guides preventing from tilting the panels on a slide.

A balance, known from a description EP1195585, featuring a weighing section that fragmentarily borders a permanent, stationary part of a balance, and that is enclosed at least from one side with a wall panel, front panel and a top covering panel. At least one of the mentioned panels is slidable using a guiding assembly for opening and closing the weighing section. The guiding assemblies are in fact complex mechanisms, comprising shafts, toothed bars, gears, guide rolls, pulleys and cords. The characteristic feature of the chamber is that the grip design of at least one of the slidable panels is integrated with the guiding assembly. Each of the guiding assemblies locks and releases a corresponding panel using a lock-forming device that can be both locked and unlocked by the fastening mechanisms using simple application of force against the panel and/or the guiding assembly. A holder for lifting the balance, in other words a handle, is also a component integrating the top panel with the system for automatic opening, and it is configured as a rail to the guiding element of the top covering panel.

The purpose of the invention is designing a new structure of the side door opening mechanism of an analytical balance that increases its operation comfort, and simultaneously is very easy in assembling and fail-safe. An additional aim is simplifying instrument's servicing process, with slightly increased manufacturing cost.

An analytical balance features a weighing chamber with two side sliding doors opened by their shift to the instrument's back side, and a weighing mechanism with housing. The automatic door opening mechanism in the weighing chamber is mechanically coupled with the doors and it is positioned under the housing of the weighing mechanism. The system feature a moveable frame assembled on external running rails and internal sliding rails, joined through drive arm with a belt gear featuring a belt and an electric motor, controlled by the positioning sensors and proximity sensors. The moveable mechanism frame applies a sliding joint for connecting with drive arm, that is rigidly connected to the gear. The frame features a crossbar with a longitudinal opening for slidable connection with the drive arm. The sliding rails are assembled along balance's base on its side sections and they form a base for the moveable frame for shifting the sliding skids. Whereas the running rails are positioned in a parallel manner to the sliding skids and they are used for guiding the moveable parts of the sliding rails, the coupler's frame to the weighing chamber doors and the doors themselves. The positioning sensors are permanently assembled under the mechanism housing and they are used for determining the extreme positions of the weighing chamber side doors. The automatic movement of the side doors is initiated by activating the proximity sensor located on balance's display housing.

This design facilitates comfortable placing samples on the balance weighing pan. The side doors can be moved manually in an independent manner or independently coupled with the moveable frame located under the weighing pan basis for enabling the automatic shift. Each of the side doors can be independently coupled by turning a knob located at their bottom edge. The balance features at least one proximity sensor with assigned function of automatic door opening. Each of the sensors can have a function assigned for opening optionally chosen slidable elements (one, the other or both). At the same time, the design is relatively simple and fail-safe, and the door shift is carried out smoothly without unnecessary shocks.

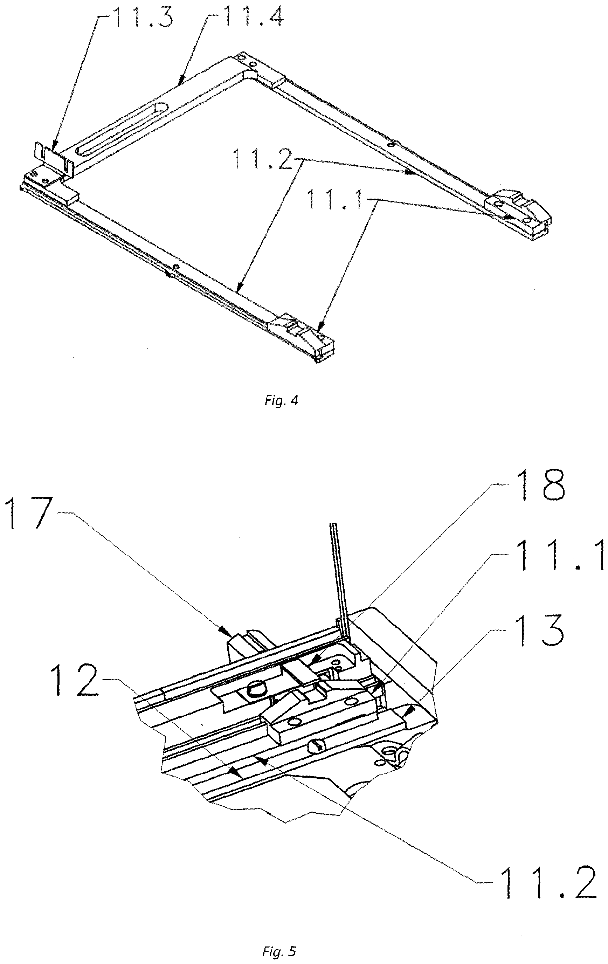

The present invention is indicated in the accompanying drawing, where fig. 1 presents balance exploded view, fig. 2 - balance base featuring door opening mechanism, fig. 3 - intersection of rails with balance base (left side), fig. 4 - the moveable frame for coupling with the doors, and fig. 5 -coupling mechanism of the frame with the doors.

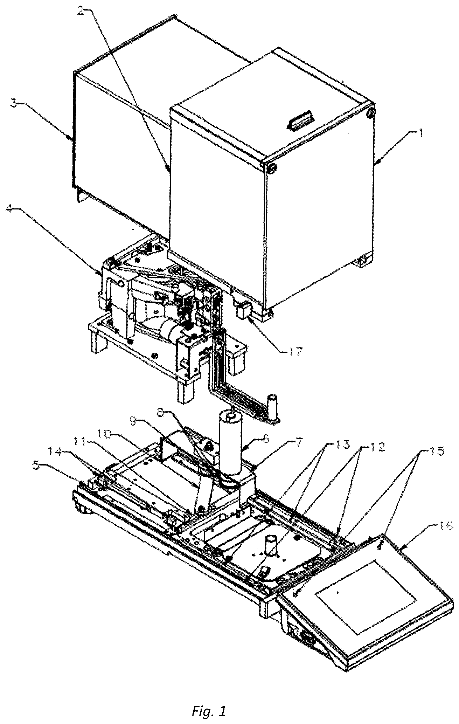

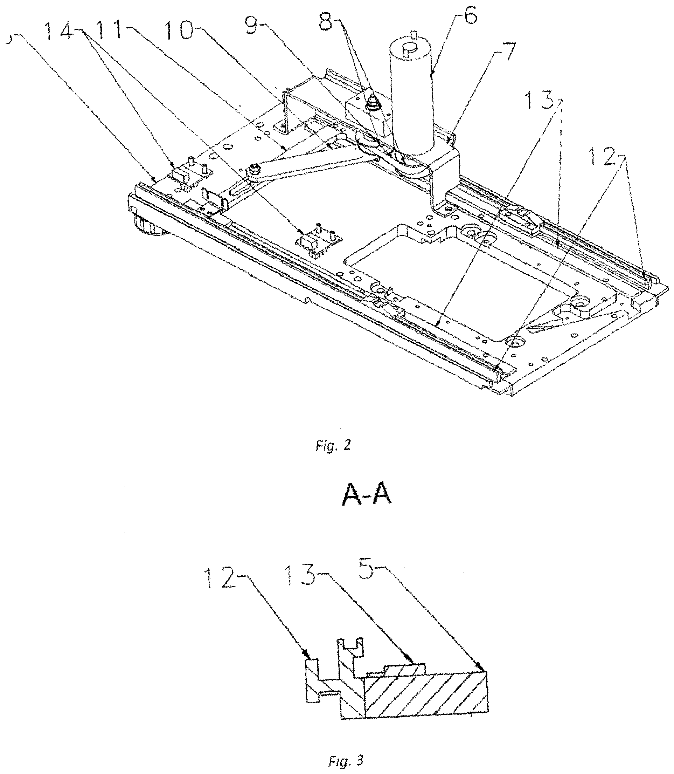

As presented in fig. 1, a balance comprises a weighing chamber (1) with a pair of side chamber doors (2) that are shifted manually or automatically providing access to the chamber interior with a weighing pan. The weighing chamber (1) comprises four side walls and a top panel, preferably transparent, adjacent at the back side with balance housing (3) enclosing the weighing mechanism (4). The automatic door opening mechanism structure as presented on fig. 2 is executed under the weighing mechanism (4) and on the balance base (5) with an electric motor (6) assembled on a door shifting mechanism cantilever (7), located next to the weighing mechanism (4). The motor is joined with a belt gear (8), a vee-belt (9), whereas the gear protects the motor against possible mechanical impact in case of emergency, and where damaging high moments of an external source are transferred by a sliding vee-belt (9). The gear side, opposite to the motor (6), features a drive arm (10) that couples the drive unit with a moveable frame (11) through a sliding joint with its crossbar (11.4). The frame (11) moves on external running rails (12) and internal sliding rails (13). The rail (13) is a flat sliding rail which positions the sliding skid (11.2) of the moveable frame (11), whereas the rail (12) is complex shaped with three passages, and the top passage forms a guide for the forming coupler to the chamber doors (11.1) rigidly connected with the sliding rail (11.2), and sliding into the internal passage at rail basis (12).

The optical positioning sensors (14) determine the extreme positions of the moveable frame (11). The positioning sensors (14) are permanently assembled under the mechanism housing (3).

The left skid (11.2) of the frame (11) features a marker (11.3) of the positioning sensors (14) for determining the unique position of the moveable of the skid (11) - chamber door (2) assembly, and generating a signal stopping the electric motor (6). The information on the position of the doors coupled with their automatic shifting mechanism is sent to the controlling system at the moment the positioning marker (11.3) is located at the sensor (9).

The movement of the automatic door opening mechanism is initiated by covering a proximity sensor (15) assembled in the displaying module (16) with the proximity sensors.

Each door is a panel, preferably designed of a transparent material, featuring a closed bottom edge enabling sliding door movement carried out in an external vertical passage of the external rail (12).

The bottom closed assembly of the door is related to a knob (17) that turning by 90° lowers the position of a rigid pawl (18). If the moveable frame (11) is located in one of its extreme positions, compatible with the position of the chamber door (2), then the pawl (18) meshes with the coupler (11.1) joining the doors with the mechanism of their automatic shifting. The downward side edges of the coupler enable automatic coupling of the moveable frame (11) with the chamber doors (2), in which the pawl (18) is shifted into the low position, though the frame (11) was located in the opposite position. In such case, initiating the automatic frame (11) shift causes the coupler (11.1) to meet the pawl (18) and lift it upwards due to its wedge-shaped structure. The pawl (18) by its movement along coupler's (11.1) surface falls into its furrows causing coupling of the both moveable elements.

### Table of components

- 1.: Weighing chamber
- 2.: Chamber doors
- 3.: Balance housing
- 4.: Weighing mechanism
- 5.: Balance basis
- 6.: Electric motor
- 7.: Door shifting mechanism cantilever
- 8.: Gear
- 9.: Vee-belt
- 10.: Drive arm
- 11.: Moveable frame
11.1. Forming coupler to the chamber doors
11.2. Sliding skid of the moveable frame
11.3. Marker for the positioning sensor
11.4. Crossbar of the moveable frame
- 12.: External running rail
- 13.: Internal sliding rail
- 14.: Positioning sensor
- 15.: Proximity sensors
- 16.: Displaying module with proximity sensors
- 17.: Fastener knob
- 18.: Rigid pawl

## Claims

1. Automatic door opening mechanism of a weighing chamber of an analytical balance, comprising weighing chamber with two side doors opened by their shift to the instrument's back side, a weighing mechanism with housing and a moveable frame (11) **characterised in that** the moveable frame (11) features a crossbar (11.4) with a longitudinal opening for slidable connection with the drive arm (10) and applies a sliding joint for connecting with the drive arm (10) that is rigidly connected to a gear (8).

2. The mechanism of claim 1, **characterized in that** it features sliding rails (13) assembled along balance's base (5) on its side sections and they form a base for the moveable frame (11) for shifting the sliding skids (11.2).

3. The mechanism of claim 1, **characterized in that** it features running rails (12) positioned in a parallel manner to the sliding rails (13) and used for guiding the frame (11) moveable parts with the sliding skids (11.2) and the couplers (11.1) to the weighing chamber doors and the doors of the weighing chamber (2).

4. The mechanism of claim 1, **characterized in that** it features positioning sensors (14) permanently assembled under the mechanism housing (3) used for determining the extreme positions of the weighing chamber's (1) side doors (2).

5. The mechanism of claim 1, wherein said automatic movement of the side doors (2) is initiated by activating the proximity sensor (15) located on balance's display housing (16).

6. The mechanism of claim 1, wherein the said gear (8) is preferably a belt gear.

## Patentansprüche

1. Automatischer Türöffnungsmechanismus der Wägekammer einer Analysenwaage, umfassend eine Wägekammer mit zwei Seitentüren, die durch ihre Verschiebung in Richtung des hinteren Teils der Vorrichtung geöffnet werden, einen Wiegemechanismus mit Gehäuse und einen beweglichen Rahmen (11), **dadurch gekennzeichnet, dass** der bewegliche Rahmen (11) eine Querstange (11.4) mit einem Längsloch zur gleitfähigen Verbindung mit dem Antriebsarm (10) aufweist und legt ein Gleitgelenk zur Verbindung mit dem Antriebsarm (10) an, der fest mit einem Getriebe (8) verbunden ist.

2. Mechanismus nach Anspruch 1, **dadurch gekennzeichnet, dass** er Gleitschienen (13) aufweist, die an den Seitenteilen entlang der Waagenbasis (5) montiert sind und für den beweglichen Rahmen (11) eine Basis zum Verschieben der Gleitkufen (11.2) bilden.

3. Mechanismus nach Anspruch 1, **dadurch gekennzeichnet, dass** er parallel zu den Gleitschienen (13) angeordnete Laufschienen (12) zur Führung der beweglichen Teile des Rahmens (11) mit den Gleitkufen (11.2) und die Koppler (11.1) zu den Türen der Wägekammer und die Türen der Wägekammer (2) aufweist.

4. Mechanismus nach Anspruch 1, **dadurch gekennzeichnet, dass** er unter dem Mechanismusgehäuse (3) fest montierte Positionssensoren (14) zur Bestimmung der Endpositionen der Seitentüren (2) der Wägekammer (1) aufweist.

5. Mechanismus nach Anspruch 1, wobei die automatische Bewegung der Seitentüren (2) durch Aktivieren des Näherungssensors (15) auf dem Anzeigegehäuse (16) der Waage eingeleitet wird.

6. Mechanismus nach Anspruch 1, wobei das oben erwähnte Getriebe (8) vorzugsweise ein Riemengetriebe ist.

## Revendications

1. Le mécanisme d'ouverture des portes automatiques d'une chambre de pesage d'une balance analytique, comprenant une chambre de pesage avec deux portes latérales ouvertes par leur déplacement vers l'arrière de l'instrument, un mécanisme de pesage avec un boîtier et un châssis mobile (11) **caractérisé en ce que** le châssis mobile (11) comporte une barre transversale (11.4) avec l'ouverture longitudinale pour la connexion coulissante avec un bras d'entraînement (10) et applique un joint coulissant pour la connexion avec le bras d'entraînement (10) qui est relié rigidement à un engrenage (8).

2. Le mécanisme de la revendication 1, est **caractérisé en ce qu'**il comporte des rails coulissants (13) assemblés le long de la base de la balance (5) sur ses sections latérales et ils forment une base pour le châssis mobile (11) permettant de déplacer les patins coulissants (11.2).

3. Le mécanisme selon la revendication 1, est **caractérisé en ce qu'**il comporte des rails de roulement (12) situés parallèlement aux rails coulissants (13) et servant à guider les parties du châssis (11) mobile avec les patins coulissants (11.2) et les coupleurs (11.1) vers les portes de la chambre de pesage et les portes de la chambre de pesage (2).

4. Le mécanisme selon la revendication 1, est **caractérisé en ce qu'**il comporte des capteurs de positionnement (14) assemblés en permanence sous le boîtier du mécanisme (3) utilisé pour déterminer les positions extrêmes des portes latérales (2) de la chambre de pesage (1).

5. Le mécanisme selon la revendication 1, dans lequel le mouvement automatique des portes latérales (2) est initié en activant le capteur de proximité (15) situé sur le boîtier (16) de l'afficheur de la balance.

6. Le mécanisme selon la revendication 1, dans lequel l'engrenage (8) est de préférence un engrenage à courroie.
